# EUROPÄISCHE PATENTSCHRIFT

(11) **EP 2 217 493 B1**
(45) Veröffentlichungstag und Bekanntmachung des Hinweises auf die Patenterteilung: **20.02.2013**
(21) Anmeldenummer: 08844853.5
(22) Anmeldetag: 21.10.2008
(51) Int. Cl.: B64D 11/00, B64C 1/14

(54) **NOTAUSSTIEGSLUKE FÜR EIN FLUGZEUG ZUM NOTAUS- UND EINSTIEG IN EIN AUFENTHALTSMODUL**
EMERGENCY EXIT HATCH FOR EXITING A CABIN MODULE IN AN EMERGENCY AND ENTERING THE SAME
HUBLOT DE SORTIE DE SECOURS POUR AÉRONEF PERMETTANT LA SORTIE D'URGENCE ET L'ENTRÉE DANS UN MODULE POUR OCCUPANTS

(30) Priorität: 30.10.2007 DE 102007051802; 30.10.2007 US 951
(43) Veröffentlichungstag der Anmeldung: 18.08.2010
(73) Patentinhaber: Airbus Operations GmbH, 21129 Hamburg (DE)
(72) Erfinder: SÜTTHOFF, Thomas, 20255 Hamburg (DE); STENDEL, Alexander, 20146 Hamburg (DE)
(74) Vertreter: Kopf, Korbinian Paul
(86) Internationale Anmeldenummer: PCT/EP2008/064203
(87) Internationale Veröffentlichungsnummer: WO 2009/056476

(56) Entgegenhaltungen:
- EP-A- 0 259 886
- EP-A- 0 901 962
- WO-A-2006/134242
- GB-A- 2 386 146
- US-A1- 2007 125 909

## Beschreibung

### Verwandte Anmeldungen

Die vorliegende Anmeldung beansprucht die Priorität der US Provisional Patentanmeldung Nr. b1/000,951, eingereicht am 30. Oktober 2007 und der deutschen Patentanmeldung Nr. 10 2007 051 802.3, eingereicht am 30. Oktober 2007.

### Gebiet der Erfindung

Die vorliegende Erfindung betrifft das technische Gebiet von Notausstiegsluken. Insbesondere betrifft die vorliegende Erfindung eine Notausstiegsluke in einem Aufenthaltsmodul in einem Flugzeug, ein Verfahren zum Betätigen einer Notausstiegsluke, ein Flugzeug mit einer entsprechenden Notausstiegsluke und die Verwendung einer entsprechenden Notausstiegsluke in einem Flugzeug.

### Technischer Hintergrund

Aufenthaltsräume für die Besatzung eines Flugzeuges (Crew), auch Crew Rest Compartment genannt (CRC) oder im Falle der Verwendung für die Cockpitbesatzung (Flight Crew) FCRC genannt, gehören zur vorgeschriebenen Pflichtausstattung von Flugzeugen bei Langzeitflügen. So wird nach internationalen Standards für Flüge mit einer Zeitdauer von 8 h bis 14 h eine Liegemöglichkeit und für Flüge über 14 h werden zwei Liegemöglichkeiten benötigt.

Eine Luke für einen FCRC ist aus dem Dokument WO 2006/134242 A2 bekannt.

Bekannte CRC und FCRC werden mit Liegemöglichkeiten, Arbeits- und Erholungsplätzen in unterschiedlichsten Kombinationen und räumlichen Ausrichtung beispielsweise im Deekenbereich, der Crown-Area des Flugzeuges, also oberhalb des für Passagiere zugänglichen Bereichs, realisiert. In diesem Falle spricht man dann von Overhead Compartments.

Um vom Hauptdeck eines Flugzeuges in diesen Bereich der Compartments zu kommen, sind Aufstiegshilfen wie Treppen mit entsprechenden Treppenhäusern vorgesehen. Kommt es während des Betriebes des Flugzeug nun zu einer Notsituation, in welcher ein schnelles und sicheres Entweichen des Benutzers aus dem Compartment notwendig wird, so ist die Benutzung einer Notausstiegsluke unverzichtbar.

Dabei ist es ein prinzipielles Problem, dass für diese Compartments und damit auch für die darin befindlichen Notausgänge nur bedingt Einbauraum zu Verfügung gestellt werden kann, da der Platz im Flugzeug begrenzt ist.

Gerade um im oberen Passagierbereich eine genügende und sichere Kopfhöhe zu realisieren, werden die Abmessungen und das Einbauvolumen der Compartments in vielen Bereichen oft minimiert.

Bekannte Lösungen von Notausstiegsluken beanspruchen für sich eine erhebliche Einbauhöhe, was sich direkt auf die Kopffreiheit des Passagierbereichs und den Comfort in den Compartments auswirkt. Dies kann einen zusätzlichen Gewichtsanteil im Flugzeug verursachen.

Weiterhin besteht das Erfordernis, weitere Zutrittsmöglichleiten beziehungsweise weitere Einstiege in solche Compartments wie Overhead Compartments zu ermöglichen. Denn sollte sich nach einem möglichen Unfall des Flugzeuges eine Deformation im Flugzeug derart ergeben, dass der übliche Ausstieg aus dem Compartment nicht mehr über die vorgesehene Treppe oder den üblichen Aufstiegsbereich möglich ist, könnten Besatzungsmitglieder in dem Compartment eingesperrt bleiben.

Weiterhin sind Verbesserungen der bisher bekannten Notluken dahin gehend erforderlich, dass Unbefugten die Betätigung eines Notausstieges verwehrt bleibt und nur Berechtigte den Mechanismus bedienen und ausrühren können.

### Darstellung der Erfindung

Es ist eine Aufgabe der Erfindung eine verbesserte Notausstiegsluke zum Notausstieg und Einstieg in ein Aufenthaltsmodul eines Flugzeuges anzugeben.

Gemäß der vorliegende Erfindung ist eine Notausstiegsluke zum Notausstieg aus einem Aufenthaltsmodul für ein Flugzeug heraus und zum Einstieg in das Aufenthaltsmodul hinein angegeben, sowie ein Verfahren zum Betätigen einer Notausstiegsluke, die Verwendung einer Notausstiegsluke in einem Flugzeug, ein Aufenthaltsmodul mit einer Notausstiegsluke und ein Flugzeug mit einer Notausstiegsluke.

Sofern im Rahmen der vorliegenden Erfindung von einem Aufenthaltsmodul gesprochen wird, ist hierunter jeder Aufenthaltsraum oder Aulenthaltsbereich für die Besatzung eines Flugzeuges gemeint, der sich an beliebiger Stelle in einem Flugzeug befinden kann. So kann ein Aufenthaltsmodul, welches für die Pilotenbesatzung ausgestaltet ist, direkt hinter dem Cockpit angebracht sein, aber auch eine Integrierung eines Compartments für die Kabinenbesetzung im Passagierbereich auf dem Hauptdeck und dabei beispielsweise im Deckenbereich (Crown Area) ist möglich und ebenso eine Ausgestaltung eines Compartments mit einer Notausstiegsluke im so genannten Lower Deck Bereich, also auf Frachtdeckebene, ist möglich. Dabei umfasst der Begriff Aufenthaltsmodul sowohl einen Aufenthaltsraum für die Besatzung, in dem geschlafen, gearbeitet oder sich erholt werden kann. Dabei sind die Begriffe Crew Rest Compartment, Flight Crew Rest Compartment und Overhead Compartment in jedem Fall mit dem Begriff Aufenthaltsmodul gleichzusetzen.

Erfindungsgemäß ist eine Notausstiegsluke zum Notausstieg aus einem Aufenthaltsmodul für ein Flugzeug heraus und zum Einstieg in das Aufenthaltsmodul hinein angegeben. Dabei weist die Notausstiegsluke einen ersten Mechanismus für eine Sichtprüfung eines Bereichs unterhalb der Notausstiegsluke durch zumindest teilweises Öffnen der Notausstiegsluke mittels des ersten Mechanismus auf. Weiterhin weist die Notausstiegsluke einen zweiten Mechanismus zum vollständigen Öffnen der Notausstiegsluke auf, wobei der erste Mechanismus nicht gleich dem zweiten Mechanismus ist, und wobei der erste Mechanismus ein Schiebemechanismus ist.

Der erfindungsgemäße erste Mechanismus versetzt somit den Benutzer der Notausstiegsluke in die Lage, beim eigentlichen und vollständigen Öffnen der Notausstiegsluke die Verursachung von Personen- und Sachschäden zu vermeiden. Die durch den ersten Mechanismus gegebene Sichtprüfung eines Bereichs unterhalb der Notausstiegsluke gewährleistet, dass sich in diesem Bereich keine Personen oder Dinge befinden, die durch die Handlung des Ausstiegs eines Besatzungsmitgliedes zu Schaden kommen können.

Mit dem Begriff "Bereich unterhalb der Ausstiegsluke" ist derjenige Bereich gemeint, in dem sich die mechanische Wirkung der Notausstiegsluke und all ihrer mechanischen Vorrichtungen erstreckt. Damit kann beispielsweise ein Klappmechanismus gemeint sein, der beim vollständigen Öffnen der Notausstiegsluke in einem Overhead Compartment in den darunter liegenden Passagierbereich schwingt, wobei gerade dieser Passagierbereich deshalb von oben eingesehen können werden soll. Mit anderen Worten ist also der Bereich einzusehen, in dem die Mechanik der Luke Verletzungen von Personen hervorrufen könnte. Somit kann durch diese Sichtprüfung durch teilweises Öffnen der Notausstiegsluke mittels des ersten Mechanismus dieser komplette Bereich eingesehen werden und es kann visuell durch den Benutzer überprüft werden, ob eine Betätigung des zweiten Mechanismus zum vollständigen Öffnen in Ordnung ist. Dabei kann es sich bei dem darunter liegenden Bereich auch um ein anderes Aufenthaltsmodul handeln, in dem sich möglicherweise andere Besatzungsmitglieder befinden können.

Dabei ist es durchaus möglich, dass diese Sichtprüfung durch teilweises Öffnen der Notausstiegsluke mittels des ersten Mechanismus vollständig erfolgen kann. In dem Fall der vorliegenden Erfindung, in dem der erste Mechanismus ein Schiebemechanismus darstellt, kann es also für den Benutzer ausreichen, beispielsweise einen kleineren Spalt durch Aufschieben des ersten Mechanismus herzustellen, um den gesamten Gefahrenbereich darunter, in dem sich mögliche zu schützende Personen oder Gegenstände befinden können, einzusehen.

Dabei ist die der Erfindung zugrunde liegende Idee durch zwei unterschiedliche Mechanismen realisiert. Das bedeutet, dass beide Mechanismen unabhängig voneinander bedienbar und funktionsfähig sind. Somit kann jeder der beiden Mechanismen zu jedem Zeitpunkt und in jedem beliebigen Zustand des jeweils anderen Mechanismus bedient werden.

Durch die vorteilhafte Ausgestaltungsform der vorliegenden Erfindung ist somit eine Notausstiegsluke angegeben, aus der im Notfall nicht nur lediglich ausgestiegen werden kann, sondern die auch von dem Bereich außerhalb des Moduls, betreten werden kann und somit einen Einstieg durch die Notausstiegsluke in das Modul ermöglicht. Dies kann in verschiedensten Gefahrensituationen, beispielsweise nach einer Deformation des Flugzeuges, bei dem der herkömmliche Aufgang oder der herkömmliche Zugang in das Modul nicht mehr benutzbar ist, von lebensrettender Bedeutung sein. Die erfindungsgemäße Ausgestaltung der Notausstiegsluke mit zwei unabhängigen und ungleichen Mechanismen gewährleistet dabei, dass in einer solchen Deformationssituation die Funktionstüchtigkeit der Luke aufrechterhalten bleibt. Denn es kann beispielsweise der erste Mechanismus, der zum teilweisen Öffnen der Notausstiegsluke eingerichtet ist, eine so große Öffnung der Luke erlauben, dass in einem besonderen Notfall, in welchem der zweite Mechanismus nicht mehr funktionsfähig ist, hierdurch ausgestiegen werden. Neben den bisher genannten Vorteilen, ist es also ein weiterer Vorteil der erfindungsgemäßen Notausstiegslukt, zwei Mechanismen zur Verfügung zu stellen, die auch durch deren einzelne Betätigung die Luke beide derart öffnen, dass ein Benutzer aussteigen und einsteigen kann.

Gemäß einem weiteren Ausführungsbeispiel der vorliegenden Erfindung sind der erste und der zweite Mechanismus von innerhalb des Moduls betätigbar und der erste und der zweite Mechanismus sind auch von außerhalb des Moduls betätigbar.

Diese erfindungsgemäße Ausgestaltung der beiden Mechanismen ermöglicht neben einer Sichtprüfung aus dem Modul heraus und in das Modul hinein auch, dass das Modul von außerhalb durch die Notausstiegsluke betreten werden kann. Diese erfindungsgemäße Möglichkeit des Einstieges in ein Aufenthaltsmodul durch die Notausstiegsluke bringt erhebliche Sicherheitsvorteile in Gefahrensituationen mit sich. Beispielsweise kann in einem Gefahrenfall, in dem sich noch Besatzungsmitglieder beispielsweise bewusstlos in dem Modul befinden, durch ein Öffnen der Notausstiegsluke von außerhalb eine Rettung erfolgen. Dies ist besonders wichtig in Fällen, in denen der übliche Ausstieg nicht benutzbar oder gar zerstört sein sollte.

Durch dieses erfindungsgemäße Ausführungsbeispiel kann also auch beispielsweise in Situationen, in denen eine räumliche Verbindung zwischen dem Bereich innerhalb des Moduls und außerhalb des Moduls vonnöten ist, diese Verbindung von beiden Seiten geschaffen werden.

Gemäß einem weiteren Ausführungsbeispiel der vorliegenden Erfindung ermöglicht der erste Mechanismus eine Sichtprüfung von einem tiefer liegenden Bereich in das Aufenthaltsmodul hinein.

Dieser tiefer liegende Bereich kann also der Bereich unterhalb der Notausstiegsluke sein in dem Falle, dass die Luke in einem Overhead Compartment verwendet wird. Kernpunkt für die beiden Begriffe "Bereich unterhalb der Notausstiegsluke" und "tiefer liegender Bereich" sind dabei, dass damit sowohl der Bereich gemeint ist, in dem die sich bewegende Mechanik der Luke Schäden verursachen könnte und ebenso der Bereich, in dem Personen von außerhalb einen Blick bei teilweise geöffneter oder ganz geöffneter Notausstiegsluke in das Modul hineinwerfen möchten. Dies kann dazu genutzt werden, dass Personen oder Dinge, die sich noch in dem Modul befinden, entdeckt und gerettet werden können. Aber auch zum alleinigen Zwecke des Herstellens einer räumlichen Verbindung, über die beispielsweise Dinge ausgetauscht werden können zwischen dem Bereich im Modul und außerhalb des Moduls, ist der erste Mechanismus eingerichtet.

Erfindungsgemäß ist der erste Mechanismus ein Mechanismus ausgewählt aus der Gruppe bestehend aus Schiebemechanismus, Schiebemechanismus mit starrer Schiebeeinheit, Schiebemechanismus mit mehreren beweglichen Schiebeeinheiten, Schiebemechanismus mit Lamellen und Schiebemechanismus mit einem rotierbaren Einzelblatt.

In einem späteren Figurenbeispiel ist ein Schiebemechanismus mit einer starren Schiebeeinheit zu sehen, die als Einzelelement in eine dafür vorgesehene Tasche verschoben wird und gleichzeitig eine Öffnung der Notausstiegsluke frei gibt. Dabei kann aber genauso gut ein Schiebemechanismus mit mehreren beweglichen Schiebeeinheiten, die sich beispielsweise rolloartig aufrollen lassen, gemeint sein. Weiterhin ist der Einsatz von lamellenartigen Schiebemechanismen, die im geschlossenen Zustand alle parallel und gestreckt vorliegen und beim Öffnen des Schiebemechanismus sich die einzelnen Lamellen aufstellen und während sie verbunden bleiben, ihre Kanten nach innen und außen weisen. Weiterhin ist ein Schiebemechanismus mit einem rotierbaren Einzelblatt möglich, wobei durch Rotation dieses Einzelblattes das teilweise Öffnen der Notausstiegsluke gewährleistet wird und somit eine Sichtprüfung ermöglicht wird. Dabei rotiert das Einzelblatt beispielsweise um seine Längsachse, die beispielsweise senkrecht zur Verschieberichtung des ersten Mechanismus ausgerichtet ist. Dies kann beispielsweise mit vertikal aufgehängten Jalousielamellen verglichen werden, bei dem zumindest eine einzelne Lamellen unabhängig von den anderen rotierbar ist.

Gemäß einem weiteren Ausführungsbeispiel der vorliegenden Erfindung ist der zweite Mechanismus der Notausstiegsluke ein Klappmechanismus.

Um in einem Notfall eine möglichst schnelle vollständige Öffnung der Notausstiegsluke zu gewährleisten, ist ein Klappmechanismus, der beispielsweise durch Gravitation angetrieben die vollständige Öffnung der Notausstiegsluke bewerkstelligt, möglich. Jedoch ist auch ein zusätzlicher Antrieb des Klappmechanismus, also beispielsweise durch eine Feder oder andere mechanische, elektronische, pneumatische und hydraulische Antriebsmittel möglich.

Ist nach einer Sichtprüfung der Ausstieg frei zugänglich und kommt keine Personen durch das vollständige Öffnen der Luke zu Schaden, kann der Klappmechanismus kann beispielsweise durch eine Drehbewegung eines dafür vorgesehenen Handgriffs, die eine Bolzenverriegelung löst, ausgelöst werden. Solch ein Klappmechanismus ist beispielsweise mit einer Achse mit entsprechenden Lagern im Rahmen der Notausstiegsluke verankert und lässt den die vollständige Öffnung der Luke bedeckenden und verschließenden Teil der Klappe um diese Achse schwingen.

Gemäß einem weiteren Ausführungsbeispiel der vorliegenden Erfindung ist der zweite Mechanismus der Notausstiegsluke unabhängig von einem Zustand des ersten Mechanismus betätigbar.

Um eine vollständige Trennung der Funktionalität beider Mechanismen zu gewährleisten, sind die Mechanismen derart ausgerichtet, dass bei einer potentiellen Beeinträchtigung einer der beiden Mechanismen der jeweils andere Mechanismus nicht davon betroffen ist. Sollte beispielsweise der erste Mechanismus beschädigt sein, so kann in einem Notfall der Benutzer immer noch die Notausstiegsluke vollständig öffnen, jedoch ist eine Sichtprüfung mittels des ersten Mechanismus nicht mehr möglich. Im umgekehrten Falle der eingeschränkten Funktionalität des zweiten Mechanismus kann der Benutzer beispielsweise durch die Bereitstellung einer genügend großen Öffnung mittels des ersten Mechanismus die Luke über diesen Weg verlassen.

Jedoch ist auch der Fall denkbar, in dem der erste Mechanismus ein Schiebemechanismus ist, der in verschiedenen Positionen arretiert und eingerastet werden kann, wobei der zweite Mechanismus unabhängig von den verschiedenen Positionen des ersten Mechanismus ausklappbar ist.

Gemäß einem weiteren Ausführungsbeispiel der vorliegenden Erfindung weist die Notausstiegsluke weiterhin eine Vorrichtung zur Zugangsfreigabe zur Bereitstellung eines kontrollierten Zutritts in das Aufenthaltsmodul hinein und/oder zur Bereitstellung eines kontrollierten Austritts aus dem Aufenthaltsmodul heraus auf.

Diese Vorrichtung zur Zugangsfreigabe ermöglicht es also, sowohl von innerhalb des Moduls als auch von außerhalb des Moduls lediglich dafür vorgesehene Personen dazu zu ermächtigen, die Luke derart und so weit zu öffnen, dass ein Aus- bzw. Eintritt möglich ist. So kann beispielsweise verhindert werden, dass unbefugte Personen aus dem Passagierbereich das Modul über die Notausstiegsluke entern bzw. betreten.

Dabei kann diese Vorrichtung beispielsweise als Tastatur, ein mechanisches oder elektromechanisches Schloss, eine biometrische Datenerfassungsanlage, ein Spracherkennungssystem, oder ein Zahlenkombinationsschloss realisiert werden.

Gemäß einem weiteren Ausführungsbeispiel der vorliegenden Erfindung ist die Vorrichtung zur Zugangsfreigabe der Notausstiegsluke ausgewählt aus der Gruppe bestehend aus elektronischer Tastatur, mechanischer Tastatur und elektromechanischer Tastatur.

Über solch eine Tastatur kann den befugten Benutzern der Notausstiegsluke sowohl von innerhalb als auch von außerhalb des Moduls der Zutritt gestattet werden. Für einen besonderen Notfall kann dieses Hindernis durch zusätzliche Maßnahmen entfallen, so dass die Bedienung dieser Vorrichtung nicht mehr vonnöten ist. Ein hierbei beispielsweise benutztes elektro-magnetisches Keypad oder Tastatur kann sich dabei in zweifacher Ausführung einmal für Innenseite und einmal für Außenseite auf der Schiebeeinheit des ersten Mechanismus befinden.

Gemäß einem weiteren Ausführungsbeispiel der vorliegenden Erfindung weist die Notausstiegsluke zusätzlich ein Element zur Erleichterung des Aus- und Einstiegs auf.

Um im Gegensatz zu bisherigen Lösungen von Notausstiegsluken auch einen Einstieg in beispielsweise ein Aufenthaltscompartment durch die Notausstiegsluke zu gewährleisten, sind bestimmte Elemente zur Erleichterung des Aus- und Einstieges an der Luke oder in der näheren Umgebung der Luke angebracht. Es können somit spezielle Trittstufen oder Griffe vorgesehen sein, die es dem Benutzer erleichtern, durch den möglicherweise engen Spalt bzw. die vollständig geöffnete Notausstiegsluke zu klettern. Da bei dem Vorgang meist ein gewisser Höhenunterschied überwunden werden muss, ist hierbei auf besonders tritt- und rutschfeste Materialien zu achten.

Gemäß einem weiteren Ausführungsbeispiel der vorliegenden Erfindung ist das Element zur Erleichterung des Aus- und Einstieges ausgewählt aus der Gruppe bestehend aus Stufe, einklappbare Stufe, Sitzlehne, Sitzfläche, Trittbrett, Handgriff und Geländer.

Es kann die Notausstiegsluke direkt über den Sitzreihen des Passagierbereichs angeordnet sein. Um nun in diesem Bereich ein- oder aussteigen zu können, sind zusätzliche Trittflächen an den umliegenden Sitzen angebracht, wobei auch die Sitzlehnen, Sitzflächen, die Armlehnen und andere einklappbare Stufen als Trittflächen verwendet werden können. Diese Elemente erleichtern den Einstieg in das vertikal darüber liegende Modul durch die Notausstiegsluke. Aber auch zusätzliche Griffe im Deckenbereich können als Elemente zur Erleichterung des Aus- und Einstieges angebracht werden.

Auch ist eine ein- und ausklappbare Stufe an der vertikalen Außenwand des Compartments eine mögliche Vorrichtung zur Erleichterung des Aus- und Einstieges. Weiterhin sind zusätzliche Griffe im Innenraum des Moduls vorgesehen, an denen sich der ein- bzw. aussteigende Benutzer sichern und festhalten kann.

Gemäß einem weiteren Ausführungsbeispiel der vorliegenden Erfindung ist die Notausstiegsluke; zur Anbringung zwischen einer Decke eines Passagierbereichs und einer Crown Area ausgeführt.

In einer ersten Variante ist die Notausstiegsluke somit kein Teil des so genannten Ceilings oder auch der Decke im Passagierbereich, sondern befindet sich zwischen diesem Ceiling und der so genannten Crown Area. Somit befindet sich also unterhalb des Notausstieges bzw. der Notausstiegsluke ein so genanntes Dekorpanel, welches in die Passagierdecke, also das Ceiling, eingearbeitet ist.

Diese beispielhafte Ausgestaltung der vorliegenden Erfindung kann beispielsweise für ein Flight Crew Rest Compartment interessant sein, da hier gewöhnlicherweise in dem Bereich unterhalb eines Dekorpanels im Ceiling keine Personen anwesend sind, und somit durch ein Herunterfallen bei einem nötigen Entfernen des Dekorpanels keine Personen- bzw. Saclischäden entstehen können.

Dadurch ist aber nicht ausgeschlossen, dass die erfindungsgemäße Notausstiegsluke direkt als Teil des Ceilings ausgestaltet ist und es somit kein Dekorpanel zwischen der Notausstiegsluke und dem Passagierbereich gibt. Die Notausstiegsluke ist somit in die Decke des Passagierbereichs eingearbeitet, direkt zugänglich und durch keine weitere Schicht optisch oder mechanisch geschützt. Diese beispielhafte Variante der Notausstiegsluke ist beispielsweise in einem Crew Rest Compartment, welches sich im hinteren Teil des Flugzeuges befindet, realisiert.

Erfindungsgemäß ist ein Verfahren zum Betätigen einer Notausstiegsluke zum Notausstieg aus einem Aufenthaltsmodul für ein Flugzeug heraus und zum Einstieg in das Aufenthaltsmodul hinein angegeben, wobei das Verfahren die folgenden Schritte aufweist: Betätigen eines ersten Mechanismus, Prüfen, ob eine Betätigung eines zweiten Mechanismus möglich ist, Betätigen eines zweiten Mechanismus zum vollständigen Öffnen der Luke, wobei der erste Mechanismus nicht gleich dem zweiten Mechanismus ist, und wobei der erste Mechanismus ein Schiebemechanismus ist.

Bei dem erfindungsgemäßen Verfahren, das sowohl einen Aus- als auch einen Einstieg in ein Aufenthaltsmodul ermöglicht, können mögliche Schäden durch Betätigung des zweiten Mechanismus zu vermieden werden. Dieses Prüfen, ob eine Betätigung des zweiten Mechanismus möglich ist, beinhaltet somit die Prüfung, ob die Betätigung des zweiten Mechanismus durch die Mechanik und Funktionsweise des zweiten Mechanismus sowohl Personen- als auch Sachschäden anrichten kann. Der Benutzer des erfindungsgemäßen Verfahrens hat also auch in einer Notsituation die Möglichkeit, das Modul zu betreten und zu verlassen, ohne Schaden anzurichten.

Damit eine vollständige unabhängige Funktionalität der beiden Mechanismen in jedem Fall gegeben ist, entsprechen sich die beiden Mechanismen 1 und 2 nicht zu 100 %. Dadurch wird gewährleistet, dass in einem Schadensfall des einen Mechanismus jeweils der andere noch funktionstüchtig sein kann.

Dabei kann die Wirkungsweise des Verfahrens zum Betätigen einer Notausstiegsluke, um das Compartment zu verlassen, in beispielhafter Ausgestaltung durch folgende Tätigkeiten beschrieben werden: einen Griff anheben und durch Drehbewegung eine Bolzenverriegelung lösen, Hatch Panel mit Hilfe des Handle in die Tasche schieben, eine Verriegelung in einer Position, die die Luke halb offen lässt, einrasten, Freigängigkeit des Ausstiegs prüfen, Handle betätigen zum vollständigen Öffnen der Luke, und Ausstieg aus der Luke mit Nutzung von beispielsweise Packsitzlehnen und Sitzflächen. Dabei ist von Bedeutung, dass gemäß anderen Ausführungsbeispielen die Reihenfolge der Verfahrensschritte durchaus variieren kann.

Gemäß einem weiteren Ausführungsbeispiel der vorliegenden Erfindung weist das erfindungsgemäße Verfahren weiterhin die folgenden Schritte auf: Anheben eines Griffs, Lösen einer Verriegelung und Feststellen einer Verriegelung.

Um beispielsweise eine Schiebeeinheit aus ihrer geschlossenen Position in eine zumindest teilweise geöffnete Position zu bringen, kann beispielsweise mittels eines Griffs und dem Lösen einer möglichen Verriegelung dieser Zustand zur Sichtprüfung eingeleitet werden. Danach ist eine Feststellung oder auch Arretierung der Schiebeeinheit mittels einer Verriegelung möglich, so dass sich bei möglichem späteren kompletten Öffnen der Luke durch beispielsweise einen Klappmechanismus sich die Verschiebeeinheit nicht mehr bewegt.

Gemäß eines weiteren Ausführungsbeispiels der vorliegenden Erfindung weist das Verfahren den folgenden Schritt auf: Entfernen eines Dekorpanels.

Dabei ist hier mit Entfernen ein sicheres Entfernen eines Dekorpanels gemeint, was berücksichtigt, dass ein herunterfallendes Bauteil bzw. Dekorpanel mögliche Verletzungen bei darunter befindlichen Passagieren verursachen kann. Dabei kann das Entfernen durch beispielsweise Schieben, Schlagen, Entgegennehmen, Drücken, Knicken und Pressen vollzogen werden. Wichtig dabei ist, dass genügend großer Raum für den Durchtritt des Benutzers beim Ein- bzw. Ausstieg zur Verfügung gestellt wird.

Das Dekorpanel kann auf der Kabinenseite angebracht sein und kann von dort bzw. von der Innenseite des Moduls entfernt werden.

Gemäß einem weiteren Ausführungsbeispiel der vorliegenden Erfindung weist das Verfahren zusätzlich den folgenden Schritt auf: Nutzung einer Aus- bzw. Einstieghilfe aus der Gruppe bestehend aus Stufe, einklappbarer Stufe, Sitzlehnen, Sitzflächen, Trittbrett, Handgriffe und Geländer.

Sollte sich die Notausstiegsluke beispielsweise oberhalb von Passagiersitzen befinden, so ist eine Nutzung von Aufstiegs- bzw. Ausstiegshilfen unvermeidlich. Diese können beispielsweise durch Trittflächen, die für besonders trittsicheren Halt bei vertikalem Einstieg in das darüber liegende Modul bieten, gewährleistet sein. Somit sind beispielsweise Armlehnen oder Rückenlehnen, die besonderes dafür ausgerichtet sind, zur Nutzung zu solch einem Zweck geeignet.

Gemäß einem weiteren Ausführungsbeispiel der vorliegenden Erfindung weist das Verfahren die folgenden Schritte zusätzlich auf: Betätigen einer Vorrichtung zur Zugangsfreigabe zur Bereitstellung eines kontrollierten Zutritts in das Aufenthaltsmodul hinein und/oder zur Bereitstellung eines kontrollierten Austritts aus dem Aufenthaltsmodul heraus.

Dabei sind folgende drei Varianten Vorrichtungen zur Zugangsfreigabe möglich: Lediglich eine Vorrichtung, die von außerhalb des Moduls bedienbar ist, eine Vorrichtung, die sowohl von außerhalb als auch von innerhalb des Moduls bedienbar ist und eine Vorrichtung, die lediglich von innerhalb des Moduls, bedienbar ist. Somit kann also bei der Variante, in der lediglich die Vorrichtung von außen betätigbar ist verhindert werden, dass Unbefugte Zutritt in das Modul erhalten. Ein Betätigen von innerhalb des Moduls ist dabei nicht möglich und erwünscht, da in einem Notfall das erfindungsgemäße Verfahren so schnell wie möglich ablaufen können muss.

So kann dieser Schritt beispielsweise als Betätigung eines Keypads gesehen werden, welches einen bestimmten Code von dem Benutzer verlangt, um die Befugnis des Benutzers zu überprüfen.

Gemäß einem weiteren Ausführungsbeispiel der vorliegenden Erfindung ist die Verwendung einer Notausstiegsluke gemäß einem Ausführungsbeispiel der vorliegende Erfindung in einem Flugzeug angegeben.

Gemäß einem weiteren Ausführungsbeispiel ist ein Aufenthaltsmodul mit einer Notausstiegsluke gemäß einem Ausführungsbeispiel der vorliegenden Erfindung für ein Flugzeug angegeben.

Gemäß einem weiteren Ausführungsbeispiel der vorliegenden Erfindung ist ein Flugzeug mit einer Notausstiegsluke gemäß einem der vorherigen Ausführungsbeispiele angegeben.

Als Vorteile sind neben geringem Einbauvolumen, geringem Gewicht durch Verwendung neuer Materialien oder Verhinderung des Betretens von Unbefugten durch elektrische oder elektromechanische Zugangsvorrichtungen auch folgende Vorteile zu nennen: Die Entsprechung hoher Sicherheitsansprüche durch die Möglichkeit der visuellen Einschätzung der gegenüberliegenden Seite, weiterhin geringer Wartungsaufwand durch effektive und einfache Mechanik, ein leichter Einstieg und Ausstieg sowie die minimale Auswirkung auf das Overhead Stowage Compartment Fassungsvolumen.

Weitere Ausführungsbeispiele und Vorteile der Erfindung ergeben sich aus der folgenden Figurenbeschreibung.

Die Darstellungen in den Figuren sind schematisch und nicht maßstäblich.

### Figurenbeschreibung

Fig. 1 bis Fig. 5 zeigen eine schematische, dreidimensionale Darstellung der erfindungsgemäßen Notausstiegsluke gemäß einem Ausführungsbeispiel der vorliegenden Erfindung.
Fig. 6 zeigt eine schematische, zweidimensionale Darstellung der erfindungsgemäßen Notausstiegsluke in einer Seitenansicht.
Fig. 7 und 8 zeigen eine schematische, zweidimensionale Darstellung der erfindungsgemäßen Notausstiegsluke gemäß einem Ausführungsbeispiel der vorliegenden Erfindung.
Fig. 9 zeigt eine schematische, dreidimensionale Darstellung der erfindungsgemäßen Notausstiegsluke gemäß einem Ausführungsbeispiel der vorliegenden Erfindung.
Fig. 10 zeigt eine schematische, dreidimensionale Darstellung eines Flugzeuges gemäß einem Ausführungsbeispiel der vorliegenden Erfindung.
Fig. 11 zeigt eine schematische, zweidimensionale Darstellung der erfindungsgemäßen Notausstiegsluke gemäß einem Ausführungsbeispiel der vorliegenden Erfindung.
Fig. 12 zeigt eine schematische, dreidimensionale Darstellung der erfindungsgemäßen Notausstiegsluke in einem Compartment gemäß einem Ausführungsbeispiel der vorliegenden Erfindung.
Fig. 13a und 13b zeigen eine schematisch, zweidimensionale Darstellung der erfindungsgemäßen Notausstiegsluke gemäß einem Ausführungsbeispiel der vorliegenden Erfindung.
Fig. 14 zeigt eine schematische, dreidimensionale Darstellung der erfindungsgemäßen Notausstiegsluke gemäß einem Ausführungsbeispiel der vorliegenden Erfindung.
Fig. 15 zeigt eine schematische, zweidimensionale Darstellung der erfindungsgemäßen Notausstiegsluke gemäß einem Ausführungsbeispiel der vorliegenden Erfindung.

Im folgenden werden mit Verweis auf die Figuren bevorzugte Ausführungsbeispiele der vorliegenden Erfindung beschrieben.

In der folgenden Figurenbeschreibung werden für die gleichen oder ähnlichen Elemente die gleichen Bezugsziffern verwendet.

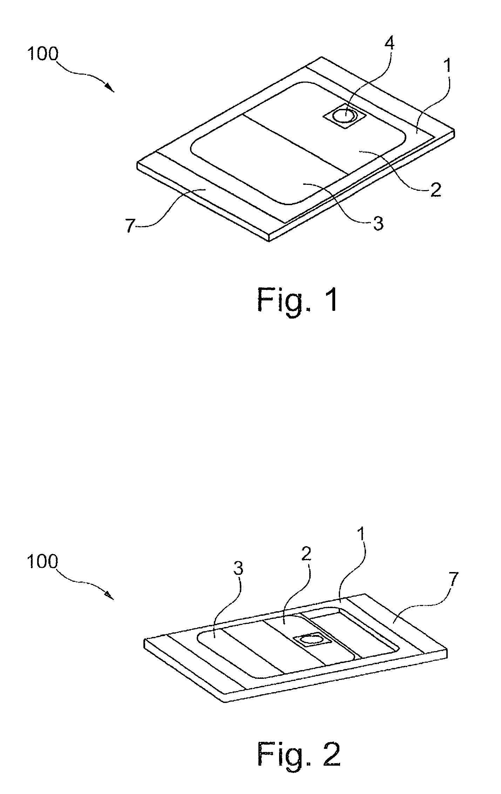

Fig. 1 zeigt ein Ausführungsbeispiel der vorliegenden Erfindung einer Notausstiegsluke 100. Die erfindungsgemäße Notausstiegsluke weist dabei einen Rahmen 1 auf, in dem sich die Lukenplatte/ein Schiebeelement oder Schiebeeinheit 2 derart befindet, dass durch Betätigen eines ersten Mechanismus mittels eines Handgriffs 4 die Lukenplatte in einen dafür vorgesehenen Verstauraum eine so genannte Tasche 3 hineinbefördert werden kann. Dabei ist weiterhin das umgebende Material 7 der Notausstiegsluke 100 gezeigt, welches in die erfindungsgemäße Notausstiegsluke 100 eingearbeitet ist. Dabei ist in Fig. 1 die Notausstiegsluke in einer komplett geschlossenen Situation gezeigt, bei der sowohl der erste Mechanismus als auch der zweite Mechanismus, die der erfindungsgemäßen Idee zugrunde liegen, vollkommen geschlossen sind.

Fig. 2 hingegen zeigt die erfindungsgemäße Notausstiegsluke 100 in einer halboffenen Position, bei der die Schiebeeinheit 2 eine teilweise Öffnung der Notausstiegsluke freigibt und zum Teil in den Verstauraum bzw. die Tasche 3 eingeschoben ist. Durch dieses teilweise Öffnen der Notausstiegsluke wird die nötige Sichtprüfung von innerhalb des Moduls aus dem Modul heraus oder von außerhalb des Moduls in das Modul hinein möglich. Dabei ist in dieser Figur das Modul, in welchem die Notausstiegsluke eingebaut ist, nicht gezeigt.

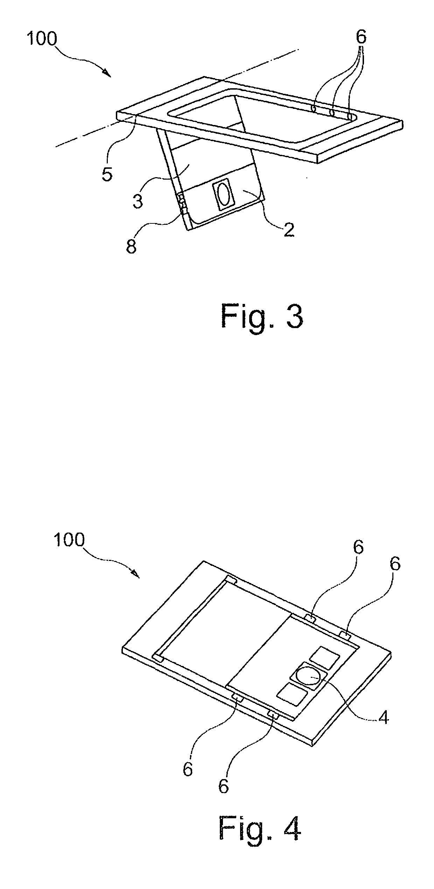

Fig. 3 zeigt ein Ausführungsbeispiel der erfindungsgemäßen Notausstiegsluke 100 in dem Zustand, nachdem der zweite Mechanismus zum vollständigen Öffnen der Notausstiegsluke betätigt wurde. Der zweite Mechanismus, hier gezeigt durch ein Scharnier für einen Klappmechanismus 5, der gewährleistet, dass die ganze Einheit samt der Lukenplatte bzw. Schiebeeinheit und der daneben befindlichen Tasche aus dem Rahmen der Notausstiegsluke herausklappt. Es sind weiterhin zwei Buchsen 6 zu sehen, in die ein Bolzen 8, der hier am Ende einer Führung gezeigt ist, arretiert werden kann. Dabei markieren die beiden gezeigten Buchsen 6 die beiden Positionen halboffen (linke Buchse) und geschlossen (rechte Buchse). Es ist hierbei deutlich zu sehen, dass der erste Mechanismus ungleich dem zweiten Mechanismus ist und dass eine Sichtprüfung eines Bereichs unterhalb der Notausstiegsluke durch zumindest teilweises Öffnen der Notausstiegsluke mittels des ersten Mechanismus erreicht werden kann. Dabei befindet sich in diesem Ausführungsbeispiel der Bereich unterhalb der Notausstiegsluke dort, wo die Klappe des Klappmechanismus hineinschwingt, also der Bereich gemeint ist, in welchem sich die Klappe im gezeigten Zustand befindet. In diesem Beispiel ist deutlich zu erkennen, dass sich dort ein Gefahrenpotential dadurch ausbildet, dass die schwingende Klappe mit den Elementen 2, 3, 8 und 5 Personen- und Sachschäden verursachen kann.

Fig. 4 zeigt eine erfindungsgemäße Notausstiegsluke 1 im geschlossenen Zustand, wobei vier Buchsen 6 gezeigt sind, die zur Arretierung des Schiebeelements bzw. der Schiebeeinheit gedacht sind. Weiterhin ist ein Handgriff 4 gezeigt, mit dem der Schiebemechanismus bzw. allgemein der erste Mechanismus betätigt werden kann.

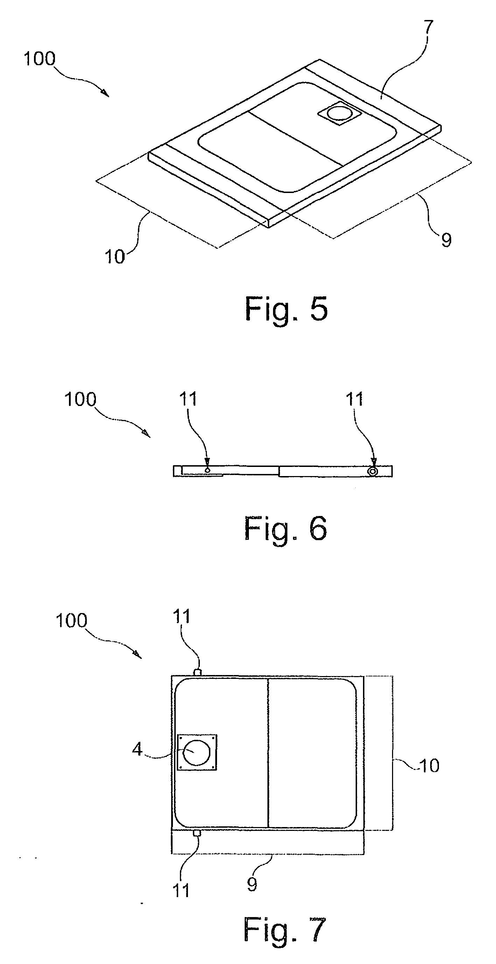

Fig. 5 zeigt eine erfindungsgemäße Notausstiegsluke in geschlossenem Zustand mit dem umgebenden Material der Notausstiegsluke 7 und den beispielhaften Abmessungen, also der Tiefe und der Breite der Notausstiegsluke. Dabei ist die Tiefe 9 beispielsweise in einem Bereich von 550 - 750 mm anzugeben, wohingegen die Breite 10 der Notausstiegsluke beispielsweise in einem Bereich von 300 - 500 mm liegen kann.

Diese Abmessungen ergeben sich durch die minimal Erfordernisse an die Luke, gegeben durch die Anatomie des Menschen. Laut etwaigen Studien können folgende Maße zu Grunde gelegt werden: Schulterbreite: 532mm, Brusttiefe: 282mm, Diagonale:602,12mm.

In einer weiteren Studie wird ein Größenbereich von X: 580-690um, Y: 330-410mm, D:667-802mm beschrieben; wobei X hier als Tiefe, Y hier als Breite und D hier als Diagonale gesehen werden kann.

Unter der Berücksichtigung von mitzuführendem Emergency Equipment, also allen Gegenständen, die der notaussteigende Benutzer mit sich führen möchte, ist hiermit ein angemessener Größenbereich der Luke beansprucht.

Dabei ist hiermit ausdrücklich darauf hingewiesen, dass alle genannten Größenangaben ein spezielles Ausführungsbeispiel der vorliegenden Erfindung beschreiben und nicht zwingend in dem genannten Rahmen liegen.

Fig. 6 zeigt eine erfindungsgemäße Notausstiegsluke 100 in der Seitenansicht. Aufgrund der konstruktionstechnischen Gestaltung der erfindungsgemäßen Notausstiegsluke kann dem Wunsch einer möglichst geringen Einbauhöhe nachgekommen werden. Unter Berücksichtigung dieses Wunsches überschreitet das Emergency Hatch nur geringfügig die normale Sandwich Paneldicke von z.B. 2,54 cm (1 Inch). Dabei ist ein Emergency Hatch eine Notausstiegsluke gemäß der vorliegenden Erfindung. Dies ermöglicht es, beispielsweise die Höhe des eigentlichen Compartments und damit die Kopffreiheit und den Komfort innerhalb des Compartments zu steigern.

Beispielhaft kann die Bauteiltiefe der Tasche, in welche das Schiebepanel geschoben wird, um die Sichtprüfung der gegenüberliegenden Seite zu ermöglichen 29,4 mm betragen. Die Bauteiltiefe im Bereich des Handgriffs kann beispielsweise 31,4 mm betragen, wobei damit der Schließmechanismus und das optionale keypad berücksichtigt sein kann.

Auch dies sind lediglich optionale Maße, die in anderen Ausführungsbeispielen verschieden ausfallen können.

Dabei sind, um ein sehr niedriges Gewicht erreichen zu können, folgende Materialien beispielsweise für folgende Teile der Notausstiegsluke verwendet: Der Rahmen kann beispielsweise aus Aluminium, das Schiebepaneel bzw. die Schiebeeinheit aus Dekor, Wabenkern, Kernfüllmasse oder Verstärkungsbuchsen gefertigt sein. Die Tasche kann beispielsweise aus CFK, der Bügel und das gegenüberliegende elektromagnctische Keypad bzw. die Tastatur können aus Aluminium oder Titan gefertigt sein, ebenso die Drehachse. Die Buchse und die Führung hingegen können aus Aluminium, der Bolzen an sich wiederum aus Titan gefertigt sein. Dabei kann beispielsweise ein Gewicht von maximal 6,5 kg erreicht werden.

Fig. 7 zeigt ein Ausführungsbeispiel der erfindungsgemäßen Notausstiegsluke 7, wobei der Griff 4 und die Bolzen 11 in einer Draufsicht erkennbar sind und die Tiefe 9 der Notausstiegsluke und Tiefe und Breite 10 der Notausstiegsluke angedeutet sind. Beispielsweise kann die Tiefe 532 mm und die Breite 444 mm sein.

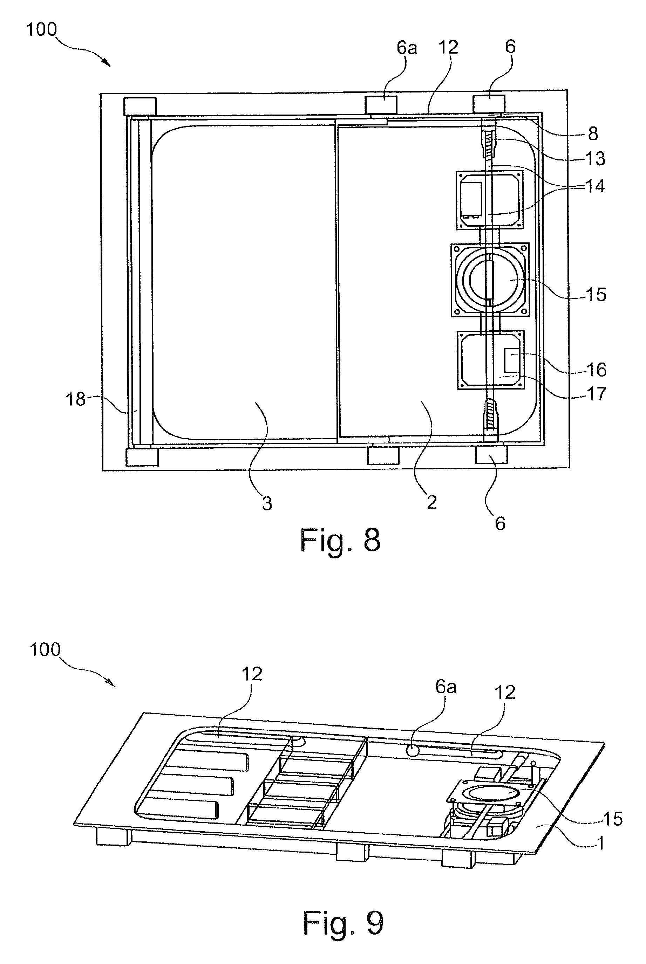

Fig. 8 zeigt eine beispielhafte Ausgestaltung der vorliegenden Erfindung, wobei beide Mechanismen detailliert dargestellt werden. Es sind die Buchsen 6 zu erkennen, in welchen der Bolzen 8, hier am Ende der Führung 12 gezeigt, einrasten kann. Diese Einrastung geschieht mittels der Feder 13, die den Bolzen von der Gelenkstange 14 wegbewegt und in die Arretierungen einfahren lässt. Diese Gelenkstange 14 kann über einen Bügel bzw. Handgriff 15 betätigt werden und lässt somit das Lösen der Arretierung in dieser geschlossenen Position zu und ermöglicht ein teilweises Öffnen der Notausstiegsluke durch diesen ersten Mechanismus. Dabei läuft das Schiebeelement bzw. die Schiebeeinheit 2 in der Führung 12 in die Tasche 3 hinein. Sie kann dann zum späteren Zeitpunkt in teilweise geöffnetem Zustand in der Buchse 6a arretiert und verriegelt werden. Anschließend kann der zweite Mechanismus betätigt werden, der über eine Achse 18 die gesamte innere Einheit, wie in Fig. 3 gezeigt, ausklappen lässt. Es ist weiterhin ein Wartungspaneel 17 gezeigt mit einer Batterie 16, die für die Tastatur, die als Vorrichtung zur Zugangsfreigabe ausgewählt ist, vorgesehen ist. Diese Tastatur kann beispielsweise von der Außenseite angebracht sein, un nur Befugten Zutritt in die Notausstiegsluke zu erlauben.

Um die Wirkungsweise der erfindungsgemäßen Notausstiegslulce und eines Aus- oder Einstieges in ein Compartment darzustellen, seien folgende nicht zwingend chronologisch auszuführende Schritte genannt: Griff anheben und durch Drehbewegung eine Bolzenverriegelung lösen, das Schiebepaneel bzw. die Schielaeeinheit mit Hilfe des Griffs in die Tasche schieben, Verriegelung in der Position der Buchse 6a einrasten, möglicherweise ein Dekorpanel auf der Kabinenseite durch die entstandene Öffnung der Notausstiegsluke entfernen, Vornehmen einer Sichtprüfung des gewünschten äußeren oder inneren Bereichs, Betätigung eines Griffs zum vollständigen Öffnen der Notausstiegsluke und darauf folgender Ausstieg mit Nutzung der Hilfselemente zum Aus- oder Einstieg und Keypad bzw. Griff betätigen zum vollständigen Öffnen der Luke.

In dieser detaillierten Figurendarstellung ist es deutlich zu erkennen, dass der zweite Mechanismus, hier ein Klappmechanismus, unabhängig vom ersten Mechanismus, hier ein Schiebemechanismus ist realisiert wurde.

Fig. 9 zeigt ein Ausführungsbeispiel der erfindungsgemäßen Notausstiegsluke 100, wobei der Rahmen der Notausstiegsluke 1 gezeigt ist mit der darin befindlichen Rührung 12, in der ein mögliche Schiebemechanismus sich bewegen kann. Die Buchse zwischen der Arretierung 6a ist weiterhin deutlich dargestellt. Ebenso ist der Bügel bzw. Handgriff 15 gezeigt, welcher eine Verbindung zur Gelenkstange 14 und dem damit verbundenen Öffnungs- bzw. Verschließ- und Arretiermechanismus verbunden ist.

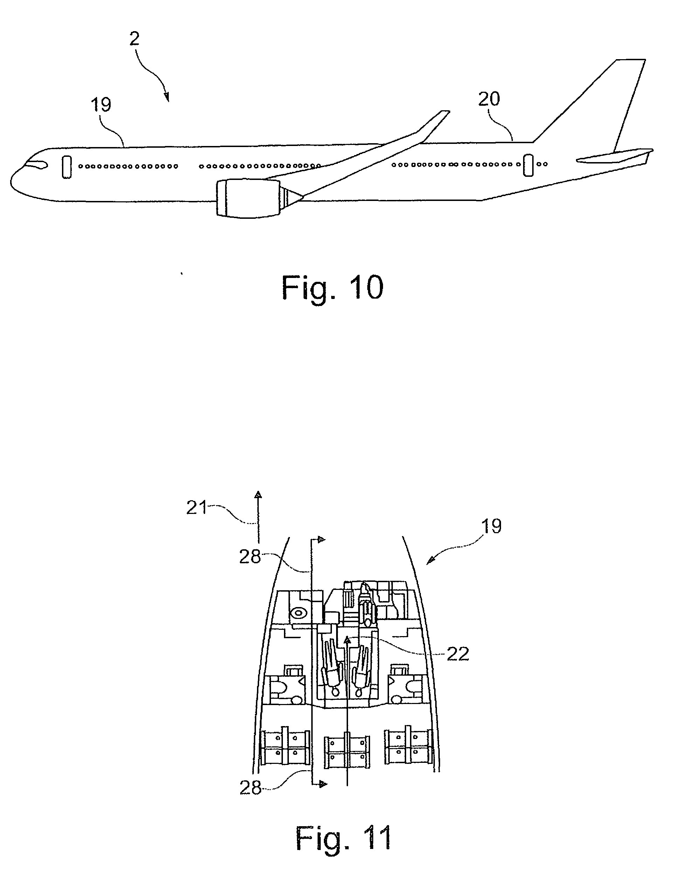

Fig. 10 zeigt ein Flugzeug, welches im vorderen Bereich ein Flight Crew Rest Compartment 19 enthält und welches im hinteren Bereich ein Crew Rest Compartment bereitstellt. Dabei ist durch diese Figur nicht ausgeschlossen, dass sowohl ein FGRC als auch ein CRC an anderen Stellen des Flugzeuges sowohl auf dem Hauptdeck als auch im darunter liegenden Frachtbereich bzw. direkt unter dem Cockpit angeordnet sein können.

Fig. 11 zeigt ein Blick von oben in ein beispielhaftes Aufenthaltsmodul mit einer Notausstiegsluke gemäß der vorliegenden Erfindung. Dabei ist die Position der Notausstiegsluke 22 zwischen zwei Betten dieses Compartments angeordnet. Dabei ist mit den beiden Pfeilen 28 eine mögliche Fluchtrichtung nach Verlassen des Compartments durch die Notausstiegsluke heraus angedeutet. 21 hingegen zeigt die Flugrichtung des Flugzeuges an.

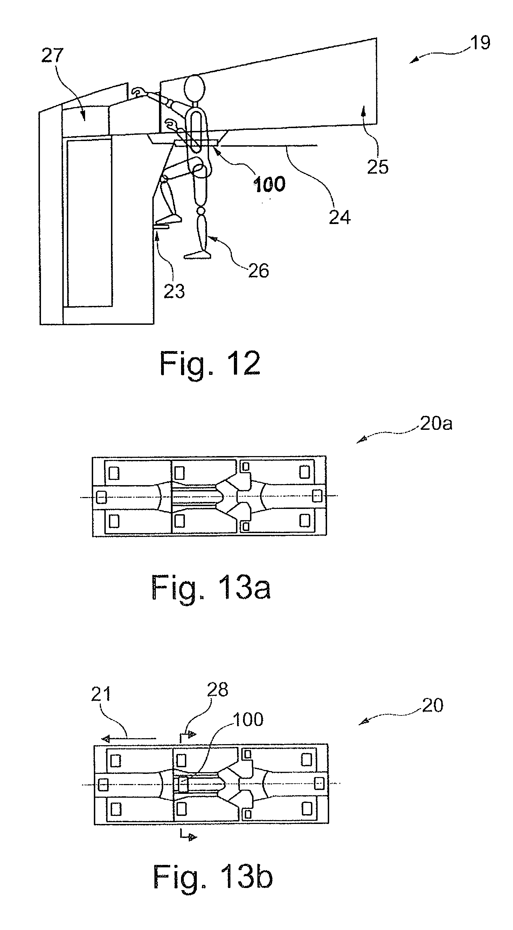

Fig. 12 zeigt ein Aufenthaltsmodul 19 mit einer Notausstiegsluke 100 gemäß einem Ausführungsbeispiel der vorliegenden Erfindung. Dabei ist hier beispielhaft ein FCRC, also ein Modul für die Flugbesatzung dargestellt, in welches gerade ein Besatzungsmitglied 26 ein- bzw. aussteigt. Es ist deutlich zu sehen, dass mittels der Aus- und Einstiegshilfe 23, die hier beispielhaft als einklappbare Stufe dargestellt ist, der Einstieg von dem unteren Hauptdeckbereich in die Crown Area ermöglicht wird. Dabei ist mit 27 die Position des normalen Aus- und Einstieges, also beispielsweise einer Treppe, gekennzeichnet. Im Falle einer möglichen Deformation dieser Treppe 27 kann also das hier gezeigte beispielhafte Compartment über die Notausstiegsluke 100 begangen oder verlassen werden und es können eingeklemmte Personen aus dem Modul gerettet werden. Es ist weiterhin eine Schlafgelegenheit 25 gezeigt, die sich oberhalb der Deckenlinie im Gangbereich 24 befindet. Wie hier beispielhaft gezeigt ist, befindet sich die Notausstiegsluke 100 auf leicht unterschiedlicher Höhe wie die Deckenlinie im Gangbereich 24. Sie ist deutlich von ihr abgesetzt um darzustellen, dass zwischen dem Ceiling und der Crown Area der Befestigungsort für die Notausstiegsluke ist und unter der Notausstiegsluke noch ein Dekorpanel, welches nicht gezeigt ist, als Teil der Deckenlinie bzw. des Ceilings existiert. Wie hier deutlich zu erkennen ist, befinden sich in dem Bereich unterhalb der Notausstiegsluke keine Sitze für Passagiere, so dass durch Entfernen eines möglichen Dekorpanels kein Personen- oder Sachschaden verursacht werden kann.

Die Fign. 13a und 13b zeigen beide ein Aufeilthaltsmodul für die Kabinenbesatzung. Fig. 13A zeigt dagegen keine Notausstiegsluke innerhalb des Moduls 20a, wohingegen 13B ein Modul 20 mit einer solchen Luke mit der Ziffer 100 darstellt.

Die Pfeile 28 markieren eine mögliche Fluchtrichtung im Notfall aus dem Modul heraus.

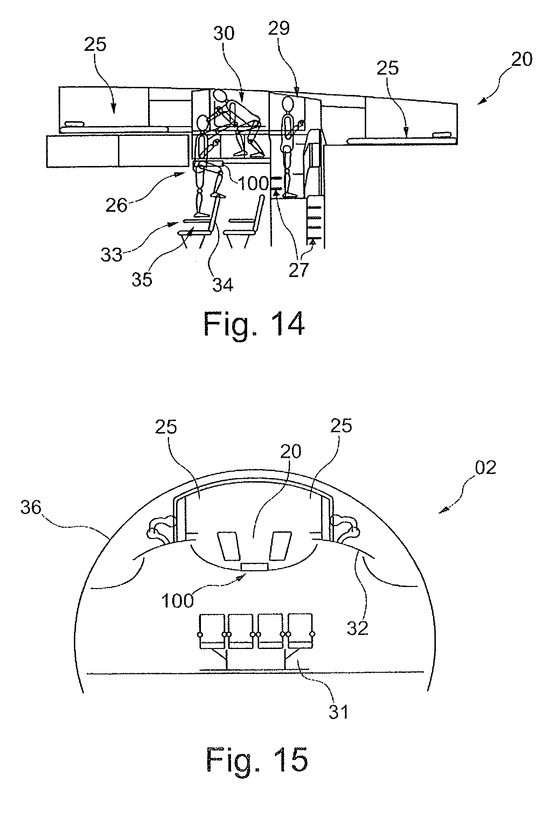

Fig. 14 zeigt ein Aufenthaltsmodul 20 mit Ausstiegsluke für die Kabinenbesatzung. Dabei ist die Position 27 des normalen Ausstieges mit einer Treppe gezeigt, die sich deutlich unterscheidet von der Position der Notausstiegsluke 100. Der Übergangsbereich 29, der mindestens Kopfhöhe aufweist, befindet sich zwischen den Bereichen rechts und links davon, in denen mehrere Schlafgelegenheiten 25 zur Verfügung gestellt werden. Weiterhin gibt es einen Bereich, in dem sich nur in geduckter Position, also mit geringerer Kopfhöhe, aufgehalten werden kann. Dies ist der Bereich 30. Weiterhin ist deutlich gezeigt, wie ein einsteigendes oder aussteigendes Besatzungsmitglied 26 mit Hilfe der Aus- bzw. Einstiegshilfen die zu überwindende vertikale Höhe bewältigt. Dabei macht er sich die zusätzlichen Elemente, die eine zusätzliche Trittstufe als Einstiegshilfe, eine Rückenlehne oder Sitzfläche als Einstieghilfe zunutze. Weiterhin ist deutlich erkennbar, dass sich die Notausstiegsluke über dem Passagierbereich und somit über sitzenden Passagieren befindet, weshalb in dieser Ausführungsform auf ein Dekorpanel unterhalb der Ausstiegsluke verzichtet wird. Denn dieses könnte bei einem möglichen Aus- oder Einstieg bei Herunterfallen Personen- oder Sachschaden verursachen.

Fig. 15 zeigt einen Querschnitt durch einen Flugzeugrumpf 36 mit einem Aufenthaltsmodul 20, welches eine Notausstiegsluke 100 enthält. Es ist die Deckenlinie 32 gekennzeichnet, die das Ceiling des Passagierbereichs darstellt. Ebenso ist hier deutlich zu sehen, dass die Notausstiegsluke 100 über Sitzen im Passagierbereich 31 angebracht ist und somit beispielsweise als Teil des Ceilings ausgestaltet sein kann. In diesem Falle ist auf ein nicht gezeigtes Dekorpanel verzichtet. Dabei sind mehrere Kojen und Schlafgelegenheiten 25 verdeutlicht.

Ergänzend ist darauf hinzuweisen, dass "unrfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 100: Notausstiegsluke
- 02: Flugzeug mit einem Aufenthaltsmodul mit einer Notausstiegsluke
- 1: Rahmen der Notausstiegsluke
- 2: Lukenplatte / Schiebeeinheit
- 3: Tasche / Verstauraum für Lukenplatte
- 4: Handgriff
- 5: Scharnier für Klappmechanismus
- 6: Buchse
- 6a: Buchse zwischen Arretierung
- 7: Umgebendes Material der Notausstiegsluke
- 8: Bolzen am Ende der Führung
- 9: Tiefe der Notausstiegsluke
- 10: Breite der Notausstiegsluke
- 11: Bolzen / Führungsstifte
- 12: Rührung
- 13: Feder
- 14: Gelenkstange
- 15: Bügel/Handgriff
- 16: Batterie (Tastatur)
- 17: Wartungspanel
- 18: Achse
- 19: Aufenthaltsmodul mit Notausstiegslulce für die Piloten (FCRC)
- 20: Aufenthaltsmodul mit Notausstiegsluke für die Kabinenbesatzung (CRC)
- 20a: Autenthaltsmodul ohne Notausstiegsluke für die Kubinenbesatzung (CRC)
- 21: Flugrichtung
- 22: Position der Notausstiegsluke in einem FCRC
- **23**: **Aus- und Einstiegshilfe**
- 24: Deckenlinie im Gangbereich
- 25: Koje / Schlafgelegenheiten
- 26: einsteigendes Besatzungsmitglied
- 27: Position des normalen Aus- und Einstiegs
- 28: Mögliche Fluchtrichtung im Notfall aus dem Modul heraus
- 29: Übergangsbereich mit mindestens Kopfhöhe
- 30: Bereich mit Steg / Laufsteg
- 31: Sitze im Passagierbereich
- 32: Deckenlinie
- 33: zusätzliche Trittstufe als Einstiegshilfe / Armlehne vom Sitz
- 34: Rückenlehne als Einstiegshilfe
- 35: Sitzfläche als Einstiegshilfe
- 36: Flugzeugrumpf

## Patentansprüche

1. Notausstiegsluke (100) zum Notausstieg aus einem Aufenthaltsmodul (19) für ein Flugzeug heraus und zum Einstieg in das Aufenthaltsmodul (19) hinein, die Notausstiegsluke (100) weisend:
einen ersten Mechanismus (2) für eine Sichtprüfung eines Bereichs unterhalb der Notausstiegsluke durch zumindest teilweises Offnen der Notausstiegsluke (100) mittels des ersten Mechanismus, (2) und
einen zweiten Mechanismus (5) zum vollständigen Öffnen der Notausstiegsluke (100);
wobei der erste Mechanismus (2) ungleich dem zweiten Mechanismus (5) ist; dardurch gekennzeichnet, dass der erste Mechanismus (2) ein Mechanismus ist, der ausgewählt ist aus der Gruppe bestehend aus Schiebemechanismus, Schiebemechanismus mit starrer Schiebeeinheit, Schiebemechanismus mit mehreren beweglichen Schiebeeinheiten, Schiebemechanismus mit Lamellen und Schiebemechanismus mit einem rotierbaren Einzelblatt.

2. Notausstiegsluke (100) nach Anspruch 1,
wobei der erste und der zweite Mechanismus (2,5) von innerhalb des Moduls betätigbar sind; und wobei der erste und der zweite Mechanismus (2,5) auch von außerhalb des Moduls betätigbar sind.

3. Notausstiegsluke (100) nach einem der vorherigen Ansprüche,
wobei der zweite Mechanismus (5) ein Klappmechanismus ist.

4. Notausstiegsluk (100) nach einem der vorherigen Ansprüche,
wobei der zweite Mechanismus (5) unabhängig von einem Zustand des ersten Mechanismus (2) betätigbar ist.

5. Notausstiegsluke (100) nach einem der vorherigen Ansprüche, die Notausstiegsluke (100) zusätzlich aufweisend:
ein Element (23) zur Erleichterung des Aus- und Einstieges.

6. Notausstiegsluke (100) nach Anspruch 5,
wobei das Element (23) zur Erleichterung des Aus- und Einstieges ausgewählt ist aus der Gruppe bestehend aus Stufe, einklappbare Stufe, Sitzlehne, Sitzfläche, Trittbrett, Handgriff und Geländer.

7. Notausstiegsluke (100) nach einem der vorherigen Ansprüche,
wobei die Notausstiegsluke zur Anbringung zwischen einer Decke eines Passagierbereiches und einer Crown-Area ausgerührt ist.

8. Verfahren zum Betätigen einer Notausstiegsluke (100) zum Notausstieg aus einem Aufenthaltsmodul (19) für ein Flugzeug heraus und zum Einstieg in das Aufenthaltsmodul hinein, das Verfahren aufweisend die folgenden Schritte:
Betätigen eines ersten Mechanismus (2),
Prüfen, ob eine Betätigung eines zweiten Mechanismus (5) möglich ist;
Betätigen eines zweiten Mechanismus (5) zum vollständigen Öffnen der Luke (100),
wobei der erste Mechanismus (2) nicht gleich dem zweiten Mechanismus (5) ist; **dadurch gekennzeichnet, dass** der erste Mechanismus (2) ein Mechanismus ist, der ausgewählt ist aus der Gruppe bestehend aus Schiebemechanismus, Schiebemechanismus mit starrer Schiebeeinheit, Schiebemechanismus mit mehreren beweglichen Schiebeeinheiten, Schiebemechanismus mit Lamellen und Schiebemechanismus mit einem rotierbaren Einzelblatt ist.

9. Verfahren nach Anspruch 8, weiterhin aufweisend die folgenden Schritte:
Anheben eines Griffs (15) und Lösen einer Verriegelung (6,8), und
Feststellen einer Verriegelung (6,8).

10. Verfahren nach einem der Ansprüche 8 oder 9, das Verfahren zusätzlich aufweisend den folgenden Schritt:
Entfernen eines Decorpanels.

11. Verfahren nach einem der vorherigen Ansprüche 8 bis 10, das Verfahren zusätzlich aufweisend den folgenden Schritt:
Nutzung einer Aus- beziehungsweise Einstiegshilfe (23) aus der Gruppe bestehend aus Stufe, einklappbare Stufe, Sitzlehnen, Sitzflächen, Trittbrett, Handgriffe und Geländer.

12. Verfahren nach einem der vorherigen Ansprüche 8 bis 11, das Verfahren zusätzlich aufweisend den folgenden Schritt:
Betätigen einer Vorrichtung (17) zur Zugangsfreigabe zur Bereitstellung eines kontrollierten Zutritts in das Aufenthaltsmodul hinein, und
zur Bereitstellung eines kontrollierten Austritts aus dem Aufenthaltsmodul heraus.

13. Verwendung einer Notausstiegsluke (100) gemäß einem der Ansprüche 1 bis 7 in einem Flugzeug.

14. Aufenthaltsmodul mit einer Notausstiegsluke (100) gemäß einem der Ansprüche 1 bis 7 für ein Flugzeug.

15. Flugzeug mit einer Notausstiegsluke (100) gemäß einem der vorherigen Ansprüche 1 bis 7.

## Claims

1. An emergency exit hatch (100) for exiting a accommodation module (19) for an aircraft in an emergency and for entering the accommodation module (19), with the emergency exit hatch (100) comprising:
a first mechanism (2) for a visual inspection of an area underneath the emergency exit hatch by at least partially opening the emergency exit hatch (100) with the aid of the first mechanism (2); and
a second mechanism (5) for completely opening the emergency exit hatch (100);
wherein the first mechanism (2) is not the same as the second mechanism (5) **characterized in, that**
the first mechanism (2) is a mechanism that is selected from the group consisting of sliding mechanisms, sliding mechanisms with a rigid sliding unit, sliding mechanisms with several movable sliding units, sliding mechanisms with lamellae and sliding mechanisms with an individual rotatable blade.

2. The emergency exit hatch (100) of claim 1,
wherein the first and the second mechanism (2, 5) can be actuated from inside the module; and
wherein the first and the second mechanism (2, 5) can also be actuated from outside the module.

3. The emergency exit hatch (100) of one of the preceding claims,
wherein the second mechanism (5) is a hinge mechanism.

4. The emergency exit hatch (100) of one of the preceding claims,
wherein the second mechanism (5) can be actuated regardless of a state of the first mechanism (2).

5. The emergency exit hatch (100) of one of the preceding claims, with the emergency exit hatch (100) additionally comprising:
an element (23) that simplifies exiting and entering.

6. The emergency exit hatch (100) of claim 5,
wherein the element (23) that simplifies exiting and entering is selected from the group consisting of steps, fold-out steps, seat backrests, seating surface, footboard, handle and handrail.

7. The emergency exit hatch (100) of one of the preceding claims,
wherein the emergency exit hatch is designed for being arranged between a ceiling of a passenger area and a crown area.

8. A method for actuating an emergency exit hatch (100) for exiting an accommodation module (19) for an aircraft in an emergency and for entering the accommodation module, with the method featuring the following steps:
actuating a first mechanism (2);
inspecting whether it is possible to actuate a second mechanism (5);
actuating a second mechanism (5) in order to completely open the hatch (100);
wherein the first mechanism (2) is not the same as the second mechanism (5), **characterized in, that**
the first mechanism is a mechanism (2) that is selected from the group consisting of sliding mechanisms, sliding mechanisms with a rigid sliding unit, sliding mechanisms with several movable sliding units, sliding mechanisms with lamellae and sliding mechanisms with an individual rotatable blade.

9. The method of claim 8, furthermore featuring the following steps:
lifting a handle (15) and disengaging a locking device (6, 8); and
engaging a locking device (6, 8).

10. The method of one of claims 8 or 9, with the method additionally featuring the following step:
removing a decorative panel.

11. The method of one of preceding claims 8 to 10, with the method additionally featuring the following step:
utilizing an exiting or entering aid (23) from the group consisting of steps, fold-out steps, seat backrests, seating surfaces, footboard, handles and handrails.

12. The method of one of preceding claims 8 to 11, with the method additionally featuring the following step:
actuating an access clearance device (17) for realizing a controlled access to the accommodation module, and
for realizing a controlled exit from the accommodation module.

13. The utilization of an emergency exit hatch (100) of one of claims 1 to 7 in an aircraft.

14. An accommodation module with an emergency exit hatch (100) of one of claims 1 to 7 for an aircraft.

15. An aircraft with an emergency exit hatch (100) of one of preceding claims 1 to 7.

## Revendications

1. Hublot de sortie de secours (100) permettant la sortie d'urgence hors d'un module de repos (19) dans un avion, et l'entrée dans le module de repos (19), le hublot de sortie de secours (100) comportant :
- un premier mécanisme (2) permettant un contrôle visuel d'une zone située en dessous du hublot de sortie de secours par une ouverture au moins partielle du hublot de sortie de secours (100) au moyen du premier mécanisme (2) ; et
- un second mécanisme (5) permettant une ouverture complète du hublot de sortie de secours (100) ;
le premier mécanisme (2) étant différent du second mécanisme (5) ;
**caractérisé par le fait que** le premier mécanisme (2) est un mécanisme qui est sélectionné parmi le groupe constitué de mécanisme à glissière, mécanisme à glissière avec unité coulissante fixe, mécanisme à glissière avec plusieurs unités coulissantes mobiles, mécanisme à glissière à lamelles et mécanisme à glissière à battant pivotant unique.

2. Hublot de sortie de secours (100) selon la revendication 1,
le premier et le second mécanisme (2, 5) pouvant être actionnés depuis l'intérieur du module ; et
le premier et le second mécanisme (2, 5) pouvant être actionnés également depuis l'extérieur du module.

3. Hublot de sortie de secours (100) selon l'une des revendications précédentes, le second mécanisme (5) étant un mécanisme de rabattement.

4. Hublot de sortie de secours (100) selon l'une des revendications précédentes, le second mécanisme (5) pouvant être actionné indépendamment d'un état du premier mécanisme (2).

5. Hublot de sortie de secours (100) selon l'une des revendications précédentes, le hublot de sortie de secours (100) comportant en outre :
- un élément (23) pour faciliter la sortie et l'entrée.

6. Hublot de sortie de secours (100) selon la revendication 5, l'élément (23) permettant de faciliter la sortie et l'entrée étant sélectionné parmi le groupe constitué de marche, marche escamotable, dossier, assise, marchepied, poignée et rampe.

7. Hublot de sortie de secours (100) selon l'une des revendications précédentes, le hublot de sortie de secours étant agencé pour être fixé entre un plafond d'une zone passager et un sommet du fuselage.

8. Procédé d'actionnement d'un hublot de sortie de secours (100) permettant la sortie d'urgence d'un module de repos (19) dans un avion, et l'entrée dans le module de repos, le procédé comprenant les étapes suivantes :
- actionnement d'un premier mécanisme (2),
- contrôle pour constater si un actionnement d'un second mécanisme (5) est possible ;
- actionnement d'un second mécanisme (5) permettant une ouverture complète du hublot (100), le premier mécanisme (2) étant différent du second mécanisme (5) ;
**caractérisé par le fait que** le premier mécanisme (2) est un mécanisme qui est sélectionné parmi le groupe constitué de mécanisme à glissière, mécanisme à glissière avec unité coulissante fixe, mécanisme à glissière avec plusieurs unités coulissantes mobiles, mécanisme à glissière à lamelles et mécanisme à glissière à battant pivotant unique.

9. Procédé selon la revendication 8, présentant en outre les étapes suivantes :
- relèvement d'une poignée (15),
- libération d'un verrouillage (6, 8), et
- arrêt d'un verrouillage (6, 8).

10. Procédé selon une des revendications 8 ou 9, le procédé présentant en outre l'étape suivante :
- retrait d'un panneau décoratif.

11. Procédé selon l'une des revendications précédentes 8 à 10, le procédé présentant en outre l'étape suivante :
- utilisation d'une aide à la montée ou à la descente (23) sélectionnée parmi le groupe constitué de marche, marche escamotable, dossiers, assises, marchepied, poignées et rampes.

12. Procédé selon l'une des revendications précédentes 8 à 11, le procédé présentant en outre l'étape suivante :
- actionnement d'un dispositif (17) d'autorisation d'accès pour la mise en oeuvre d'un accès contrôlé à l'intérieur du module de repos, et pour la mise en oeuvre d'une sortie contrôlée hors du module de repos.

13. Utilisation d'un hublot de sortie de secours (100) selon l'une des revendications 1 à 7 dans un avion.

14. Module de repos avec un hublot de sortie de secours (100) selon l'une des revendications 1 à 7 pour un avion.

15. Avion avec un hublot de sortie de secours (100) selon l'une des revendications précédentes 1 à 7.
